# EUROPEAN PATENT APPLICATION

(11) **EP 1 136 533 A1**
(43) Date of publication of application: **26.09.2001**
(21) Application number: 01300368.6
(22) Date of filing: 16.01.2001
(51) Int. Cl.: C09D 183/16, C08K 5/56

(54) **Curable silicone compositions incorporating photoactive onium salts**

(30) Priority: 28.01.2000 US 494154
(71) Applicant: GENERAL ELECTRIC COMPANY, Schenectady, NY 12345 (US)
(72) Inventor: Malpert, John H., Bowling Green, Ohio 43402 (US); Mejiritski, Alex, Bowling Green, Ohio 43402 (US); Neckers, Douglas C., Perrysburg, Ohio 43551 (US); Rubinsztajn, Slawomir, Niskayuna, New York 12309 (US)
(74) Representative: Szary, Anne Catherine, Dr.

(57) **Abstract**

Cationically polymerizable or crosslinkable compositions including onium salts exhibit excellent homogeneity and photoactivity. These compositions are especially useful for the preparation of antiadhesive coatings. Methods for generating these antiadhesive coatings and articles bearing them are also described.

## Description

The present invention relates to ultraviolet-curable silicone coating compositions comprising onium salts. More particularly, it relates to cationically polymerizable and/or crosslinkable silicone compositions comprising iodonium salts with high solubility and high catalytic activity.

Silicone release coatings are used to render surfaces non-adherent to materials which would normally adhere thereto, and they are widely used as coatings which release pressure-sensitive adhesives for labels, decorative laminates, transfer tapes, and the like. Such release coatings are advantageously formed by the cross-linking of epoxy-functionalized siloxane polymers in the presence of an ultraviolet (UV) cationic initiator. Various bis(aryl)iodonium salt cationic photocatalysts have been described in U.S. Patent No. 4,279,717 to Eckberg et al., and U.S. Patent Nos. 4,264,703 , 4,399,071, 4,617,238, and 4,882,201 to Crivello et al. Iodonium salts described in these patents are limited in their ability to catalyze polymerization of epoxy-functionalized siloxanes by their low solubility in the reagent siloxane polymers. US Patent No. 5,468,890 to Herzig et al. describes diaryliodonium salts with substituents that improve catalyst solubility in various cationically polymerizable substances, but the salts described in this reference are still not sufficiently soluble in epoxy-functionalized siloxane polymers with a low content of epoxy groups. U.S. Patent No. 5,340,898 to Cavezzan et al. describes polymerizable silicone compositions containing specific catalytically active onium borate salts. In particular, the borate ion is substituted with at least one electron-withdrawing aryl substituent. Some of the salts described in this reference exhibit improved solubility in epoxy-functionalized siloxane polymers, but their practical utility is limited by high cost.

Notwithstanding extensive investigation into catalysts for curing silicone coating compositions, there remains a need for affordable catalysts that exhibit high solubility in epoxy-functionalized siloxane polymers and high catalytic activity for their curing.

Good homogeneity and high curing activity is exhibited by cationically polymerizable and/or crosslinkable compositions comprising an epoxy-functionalized siloxane polymer and a catalytically effective amount of an onium salt such as iodonium, sulfonium, phosphonium, ferrocenium or diazonium of formula (I)

Q⁺ [MR³ ₐX_{b}] (I)

wherein Q is a onium cation; M is Al, Ga, In or Tl; R³ are identical or different and represent a monovalent aromatic hydrocarbon radical having from 6 to 14 carbon atoms with at least one electron-withdrawing element or group such as -CF₃, -NO₂ or -CN, or with at least two halogen atoms; X is a halogen atom or hydroxyl group; a is 1, 2, 3 or 4; and b is 0, 1, 2 or 3; with the proviso that a+b =4.

Ultraviolet light curable coating compositions are obtained by combining a cationically polymerizable or crosslinkable material with a catalytically effective amount of an onium salt of formula (I)

Q⁺[MR³ ₐX_{b}] (I)

wherein Q is an onium cation selected from the group consisting of iodonium, sulfonium, phosphonium, ferrocenium or diazonium; M is Al, Ga, In or Tl; R³ are identical or different and represent a monovalent aromatic hydrocarbon radical having from 6 to 14 carbon atoms with at least one electron-withdrawing element or group such as -CF₃, -NO₂ or -CN, or with at least two halogen atoms; X is a halogen atom or hydroxyl group; a is 1, 2, 3 or 4; and b is 0, 1, 2 or 3; with the proviso that a+b =4.

Preferred onium salts are diaryliodonium salts of formula (II)

[R¹-I-R²]⁺ [MR³ ₐX_{b}]⁻ (II)

wherein R¹ and R² are each independently a monovalent aromatic radical having from 6 to 24 carbon atoms; M is Al, Ga, In or TI; R³ are identical or different and represent a monovalent aromatic hydrocarbon radical having from 6 to 14 carbon atoms with at least one electron-withdrawing element or group such as -CF₃, -NO₂ or -CN, or with at least two halogen atoms; X is a halogen atom or hydroxyl group; a is 1, 2, 3 or 4; and b is 0, 1, 2 or 3, with the proviso that a+b=4. The monovalent aromatic radicals R¹ and R² may be unsubstituted or substituted with any group that does not interfere with catalyst function. Preferred substituents include C₁₋₁₈ alkyl, C₁₋₁₈ alkoxy, and trialkylsilane-terminated C₁₋₁₈ alkyl; each of these substituents can be uninterrupted or interrupted by one or more oxygen and/or sulfur atoms.

Highly preferred iodonium salts for use in the UV-curable compositions are iodonium gallate salts given by formula (III) 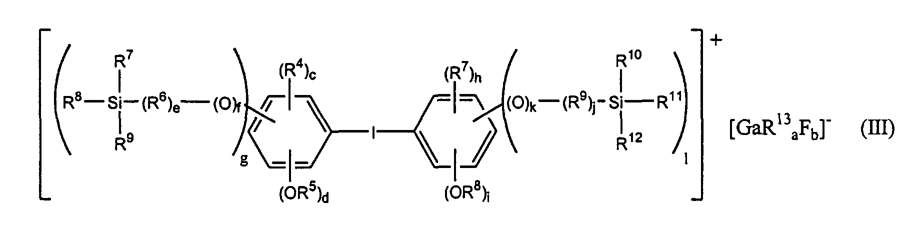 wherein
a and b have the same meanings as in formula (II);
R⁴, R⁵, R⁷ and R⁸ are independently an alkyl group having from 1 to 18 carbons uninterrupted or interrupted by one or more oxygen and/or sulfur atoms;
R⁶ and R⁹ are independently a divalent aliphatic hydrocarbon radical having from 1 to 18 carbon atoms per radical, which is uninterrupted or interrupted by one or more oxygen and/or sulfur atoms;
R⁷, R⁸, R⁹ R¹⁰, R¹¹ and R¹² are independently a monovalent hydrocarbon radical having from 1 to 18 carbon atoms, which is uninterrupted or interrupted by one or more oxygen and/or sulfur atoms;
R¹³ are identical or different and selected from the group of substituted phenyls consisting of -C₆F₅, -C₆H₄(CF₃), and -C₆H₃(CF₃)₂;
c, d, g, h, i and I are independently 0, 1, 2, 3, 4 or 5, with the proviso that each of the sums c+d+g and h+i+l not exceed 5.

Examples of especially preferred compounds include 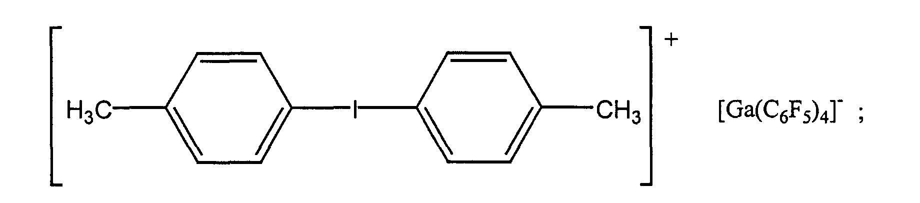 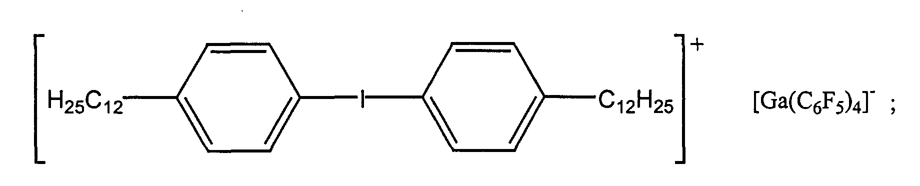 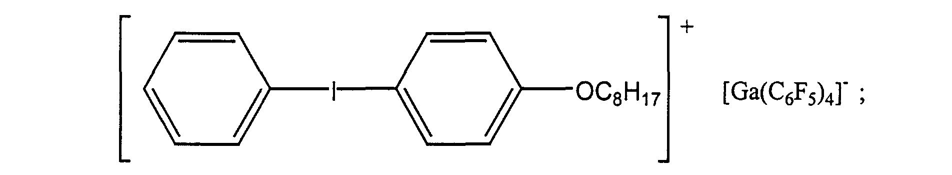 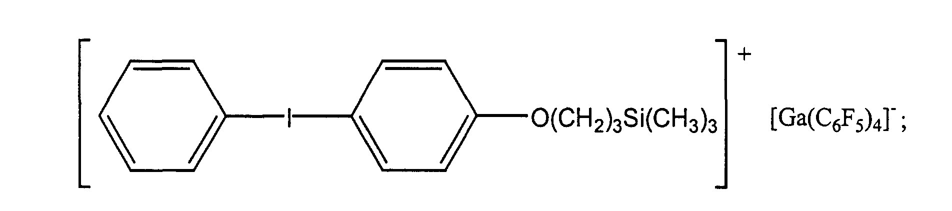 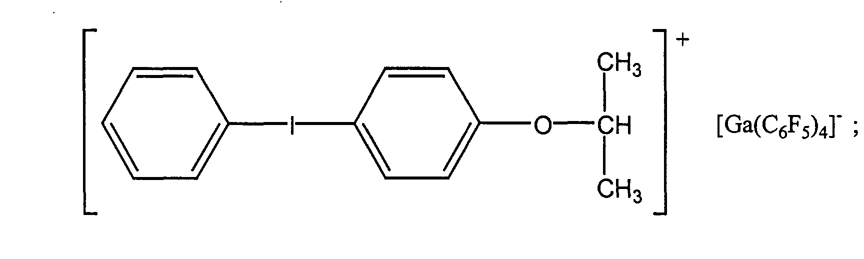 and

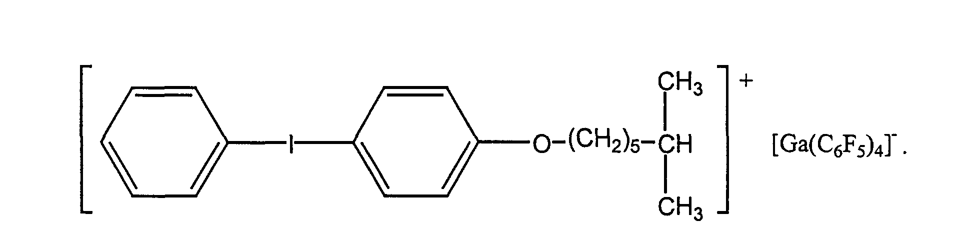

The iodonium salts may be employed at a concentration of about 0.01 to about 10 weight percent of the total polymerizable composition. A preferred concentration is about 0.1 to about 2 weight percent, and a more preferred concentration is about 0.1 to about 1 weight percent.

The iodonium gallate salts of the invention can be prepared by synthetic procedures such as those described in the synthetic examples, below.

Cationically polymerizable or crosslinkable silicone materials suitable for use include materials substituted with vinylether groups, propenylether groups, epoxides, and acrylate groups. Preferred cationically polymerizable or crosslinkable materials are epoxy-functionalized siloxane polymers. Epoxy-functionalized siloxane polymers suitable for curing by iodonium salts of the present invention are described in US Patent Nos. 4,279,717, 5,397,813 and 5,583,195 of Eckberg et al., which are incorporated herein by reference. Preferred epoxy-functionalized siloxane polymers include β-(3,4-epoxycyclohexyl)ethyltrimethoxy silane, dialkylepoxysiloxy- chain-stopped polydialkyl-alkylepoxysiloxane copolymers (such as the materials sold as UV9315 and UV9400 by General Electric Silicones), and trialkylsiloxy-chain-stopped polydialkyl-alkylepoxysiloxane copolymers (such the material sold as UV9300 by General Electric Silicones), epoxy functional siloxane resin (such as the material sold as UV9430 by General Electric Silicones, and those described in US Patent No. 5,360,833 to Eckberg et al.), blends of epoxy functional siloxane copolymers with vinyl and/or propenyl ethers (such as those described in US Patent No. 5,650,453 to Eckberg et al.).

The compositions can additionally contain other additives and adjuvants, such as adherence modulators (linear silicone polymers or resins bearing vinyl, epoxy, vinyl ether, alcohol and the like functional groups), pigments, photosensitizing agents, anchorage additives, fungicidal, bactericidal and antimicrobial agents, corrosion inhibitors and the like.

The compositions according to the invention can be used as such or in solution in an organic solvent. The compositions advantageously exhibit a viscosity not exceeding 5,000 mPa.sec, preferably not exceeding 2000 mPa.sec at 25°C. They are useful for providing antiadherent coatings on cellulosic materials, films, paints, encapsulation of electrical and electronic components, coatings for textiles and for sheathing optical fibers. They are very particularly advantageous when they are used, as such, to produce a material, such as metal sheet, glass, plastic or paper, that is nonadherent to other materials to which it would normally adhere.

Thus, the present invention also features a process for the production of articles (sheets for example) that are nonadherent to surfaces to which they normally adhere, comprising coating an amount of the subject composition, generally from 0.1 to 5 g/m², onto at least one face surface thereof, and crosslinking the composition by supplying energy, as, for example, UV radiation or electron beam.

The present invention also features the final articles (sheets for example) comprising a solid material (metal, glass, plastic, paper, and the like), at least one face surface of which is coated with a composition as described above, which composition is photocrosslinked or cross-linked by an electron beam.

The invention is further illustrated by the following non-limiting examples.

### SYNTHETIC EXAMPLE 1

### Synthesis of Lithium Tetrakis(pentafluorophenyl)gallate Etherate.

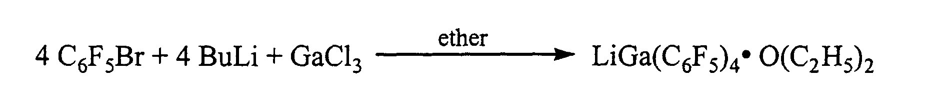

In a glove box under inert nitrogen atmosphere, the gallium trichloride (19.97 g, 113 millimole) was transferred into an addition funnel for solids. The addition funnel was attached to a 500-milliliter three-neck round-bottomed flask, which was sealed with two rubber septa. The apparatus was removed from the glove box, and 200 milliliter of anhydrous ether was added via cannula to the round-bottomed flask. This solution was cooled to -40 °C, and the GaCl₃ was added in small portions. An exothermic reaction ensued, forming the gallium trichloride etherate complex.

Into a 1-L four-neck round bottom flask fitted with a thermometer and two different addition funnels, was placed the bromopentafluorobenzene (115 g, 466 millimole) and 400 milliliter of anhydrous ether. The solution was cooled to -78 °C . The BuLi (182 milliliter of a 2.5 M solution in hexanes, 455 millimole) was added via cannula to one of the addition funnels, then added dropwise over a period of six hours. The internal temperature was not allowed to rise above -75 °C during the addition. The solution was then stirred at -78 °C for one hour while the GaCl₃ solution was being prepared.

The GaCl₃ etherate solution that was prepared earlier was then transferred to the other addition funnel. This solution was then added dropwise over a period of three hours. After the addition, the solution was stirred 2 hours at -78 °C, gradually warming to room temperature. The solution was stirred for another 5 hours at room temperature. Upon warming, the LiCI began to precipitate out of solution. The solution was filtered to give 13.8 g of LiCI.

The filtrate was concentrated and washed with hexane, then dried via vacuum to give 99.3 grams of a white solid, LiGa(C₆F₅)₄ complexed ethyl ether.

### SYNTHETIC EXAMPLE 2

### Synthesis of (4-Octyloxyphenyl)phenyl iodonium gallate (OPPI Gallate).

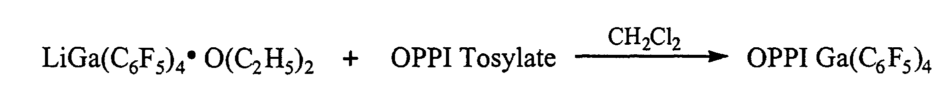

The lithium gallate salt (67.1 g, 90 millimole) was dissolved in 400 milliliter of dichloromethane. The OPPI tosylate (52.2 g, 90 millimole) was dissolved in 200 milliliter of dichloromethane and added dropwise via addition funnel to the gallate. The solid that formed was filtered, and the filtrate evaporated to give 73 g (71 % yield) of a sticky yellow solution. This liquid was dissolved with roughly an equal amount of dichloromethane and filtered through 1-2 inches of silica gel.

### EXAMPLE 1

Solubilities and photoactivities were determined for four new iodonium salts and four comparative iodonium salts in an epoxyfunctional polydimethyl siloxane copolymer M^{Ep}D^{Ep}ₓD_{y}M^{Ep} material sold as UV9315 by General Electric Silicones. The structures of the four new iodonium salts are given in Table 1.

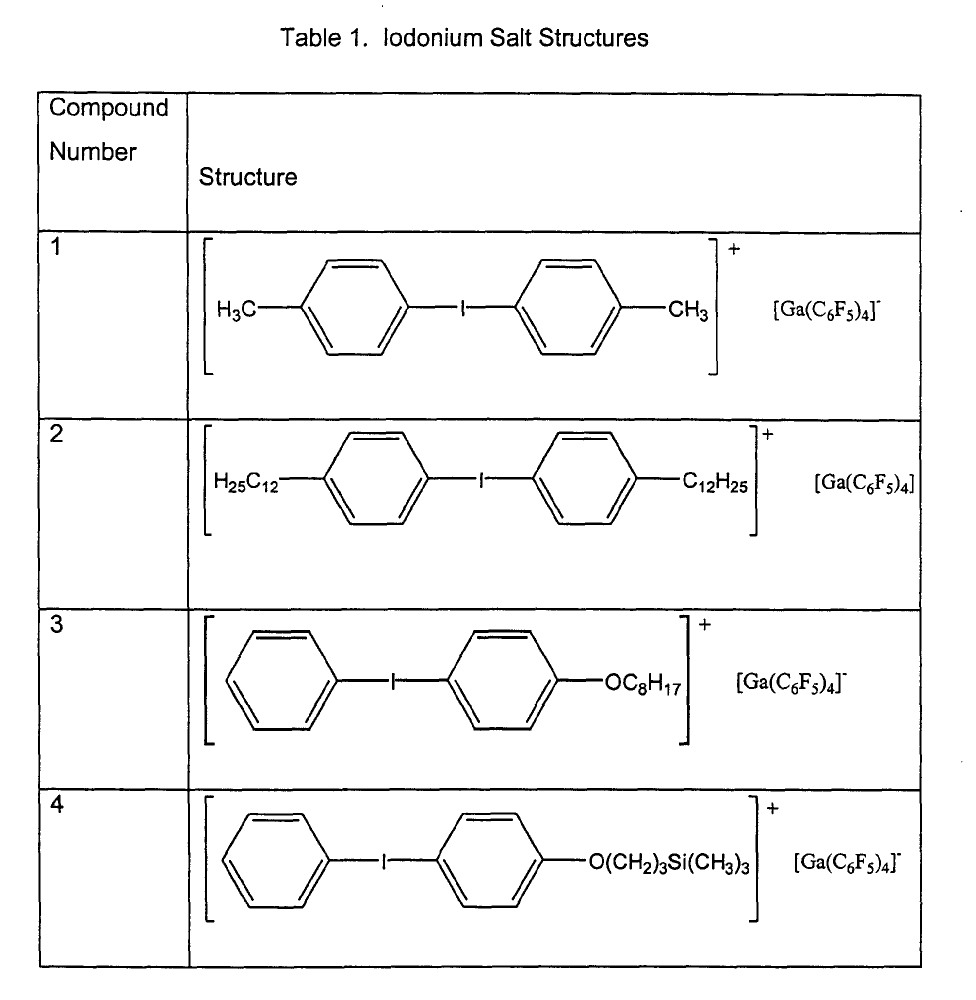

The comparative iodonium salts are as follows:
Compound 5 - bis(dodecylphenyl)iodonium hexafluoroantimonate, obtained as UV9380C from General Electric Silicones;
Compound 6 - (4-octyloxyphenyl)phenyliodonium hexafluoroantimonate, obtained as UV9392C from General Electric Silicones;
Compound 7 - (isopropylphenyl)-4-methylphenyliodonium tetrakis(pentaflurophenyl)borate, obtained as Rhodosil 2074 from Rhodia.

The solubility of each iodonium salt was evaluated visually at 1 weight percent in UV9315. The same catalyst concentration was used for the photoactivity determination. For this study, approximately five drops of the 1 weight percent solution was placed in drilled wells (about ¾ x ¾ × ¼ inches) on a Teflon sheet. Samples were irradiated on a moving belt with a fusion "H" bulb to produce the following light exposures: 640 mJ/cm² at 44 feet per minute (FPM) and 180 mJ/cm² at 120 feet per minute. The following scale was used to evaluate the extent of UV cure:
1 - no cure (no noticeable viscosity increase);
2 - gel (slight viscosity increase);
3 - very soft shell (very little of the bead is cured through; surface appears extremely soft to the touch; indentation remains);
4 - soft shell (50% of the bead is cured through, surface appears soft to the touch);
5 - hard shell (most of the bead is cured through, little liquid remains inside, surface appears hard to the touch);
6 - complete cure (the whole bead is hard cured)

Solubility and photoactivity results are presented in Table 2.

**Table 2.**

| Solubility and Photoactivity Test Results | | |
|---|---|---|
| Compound No. | Solubility in UV9315 | Photoactivity in UV9315 |
| 1 | soluble | 6 @ 120 FPM |
| 2 | soluble | 6 @ 120 FPM |
| 3 | soluble | 6 @ 120 FPM |
| 4 | soluble | 6 @ 120 FPM |
| 5* | soluble but hazy | 6 @ 44 FPM |
| 6* | mostly insoluble | 3 @ 44 FPM |
| 7* | soluble | 6 @ 120 FPM |

| | | |
|---|---|---|
| *comparison | | |

### Example 2

Compound 4 of the invention and comparison Compound 8 (a 20 weight percent solution of (isopropoxyphenyl)phenyliodonium tetrakis(pentaflurophenyl)borate in diacetone alcohol, obtained as PC702 from Rhodia) were evaluated for their solubility and photoactivity in an epoxy-functionalized siloxane polymer obtained as GE Siloxane resin UV9400. For each catalyst, 23 weight percent solutions were prepared in diacetone alcohol, and these diacetone alcohol solutions were used to prepare 1 and 2 weight percent catalyst solutions in UV9400. After two hours at room temperature, these solutions were tested for haze using a DRT100B turbidimeter from HF Scientific Inc. After turbidity testing, the solutions were coated onto 48 pound polyethylenekraft (PEK) paper from Thilmany using a blade coater and exposed to UV light with two mercury lamps emitting 300 watts/inch. Samples were passed under the UV light source at line speeds of 150 and 300 and feet/minute to determine the minimum line speed at which curing was complete. Extent of curing was determined with a finger wiping test, and complete curing corresponded to complete resistance to smearing. Results of this test are expressed as line speed (in feet per minute, FPM) required for complete cure, with higher line speed values being desirable and corresponding to higher photoactivity. Solutions were also evaluated with photo-DSC (DSC = differential scanning calorimetry) to determine the time of maximum rate of reaction. Lower times are desirable inasmuch as they correspond to higher photoactivity and faster reactions. Results for all tests are given in Table 3 as a function of catalyst identity and concentration.

**Table 3.**

| Solubility and Photoactivity Test Results | | | | |
|---|---|---|---|---|
| Compound No. | Concentration (weight percent) | Turbidity (NTU) | Line speed (FPM) required for complete cure | Peak reaction time (minutes) by photo-DSC |
| 4 | 1 | 5.6 | 150 | 1.35 |
| 8* | 1 | 5.6 | 150 | 1.38 |
| 4 | 2 | 5.6 | 300 | 1.30 |
| 8* | 2 | 5.6 | 300 | 1.33 |

| | | | | |
|---|---|---|---|---|
| *comparison | | | | |

These results indicate good solubility and good photoactivity for both Compound 4 of the invention and Compound 8.

The general conclusion from both Examples is that compositions of the invention enable good catalyst solubility and photoactivity.

While preferred embodiments have been shown and described, various modifications and substitutions may be made thereto without departing from the spirit and scope of the invention. Accordingly, it is to be understood that the present invention has been described by way of illustration and not limitation.

## Claims

1. A composition comprising (a) a cationically polymerizable or crosslinkable silicone material and (b) a catalytically effective amount of an onium salt of formula (I)
Q⁺[MR³ ₐX_{b}] (I)
wherein Q is an onium cation selected from the group consisting of iodonium, sulfonium, phosphonium, ferrocenium and diazonium; M is Al, Ga, In or TI; R³ are identical or different and represent a monovalent aromatic hydrocarbon radical having from 6 to 14 carbon atoms with at least one electron-withdrawing element or group such as -CF₃, -NO₂ or -CN, or with at least two halogen atoms; X is a halogen atom or hydroxyl group; and a is 1, 2, 3 or 4, and b is 0, 1, 2 or 3, with the proviso that a+b =4.

2. A composition according to claim 1, wherein said onium salt is an iodonium salt of formula (II)
[R¹-I-R²]⁺ [MR³ ₐX_{b}]⁻ (II)
wherein R¹ and R² are each independently a monovalent aromatic radical having from 6 to 24 carbon atoms; M is Al, Ga, In or TI; R³ are identical or different and represent a monovalent aromatic hydrocarbon radical having from 6 to 14 carbon atoms with at least one electron-withdrawing element or group, or with at least two halogen atoms; X is a halogen atom or hydroxyl group; and a is 1, 2, 3 or 4, and b is 0, 1, 2 or 3, with the proviso that a+b=4.

3. A composition according to claim 1 or claim 2, wherein said cationically polymerizable or crosslinkable silicone material is an epoxy-functionalized siloxane polymer.

4. A composition according to any preceding claim, wherein M is Ga.

5. A composition according to any preceding claim, wherein R³ is selected from the group consisting of -C₆F₅, -C₆H₄(CF₃), and -C₆H₃(CF₃)₂;

6. A cationically polymerizable and/or crosslinkable composition, comprising (a) an epoxy-functionalized siloxane polymer; and (b) a catalytically effective amount of an iodonium gallate salt of formula (III) 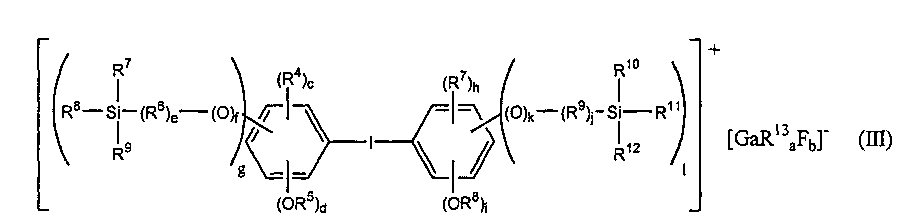 wherein
R⁴, R⁵, R⁷ and R⁸ are independently an alkyl group having from 1 to 18 carbons uninterrupted or interrupted by at least one oxygen atom, sulfur atom, or a combination thereof;
R⁶ and R⁹ are independently a divalent aliphatic hydrocarbon radical having from 1 to 18 carbon atoms per radical, which is uninterrupted or interrupted by at least one oxygen atom, sulfur atom, or a combination thereof;
R⁷, R⁸, R⁹ R¹⁰, R¹¹ and R¹² are independently a monovalent hydrocarbon radical having from 1 to 18 carbon atoms, which is uninterrupted or interrupted by at least one oxygen atom, sulfur atom, or a combination thereof;
R¹³ are identical or different and selected from the group of substituted phenyls consisting of -C₆F₅, -C₆H₄(CF₃), and -C₆H₃(CF₃)₂;
a is 1, 2, 3 or 4 and b is 0, 1, 2 or 3 with the proviso that a+b =4; and
c, d, g, h, i and I are independently 0, 1, 2, 3, 4 or 5, with the proviso that each of the sums c+d+g and h+i+l not exceed 5.

7. A cationically polymerizable and/or crosslinkable composition according to claim 6, wherein the iodonium gallate salt is selected from the group consisting of 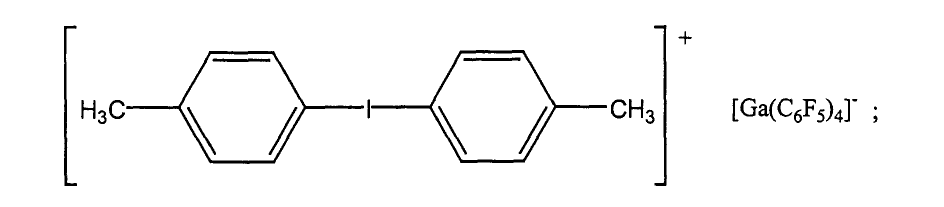 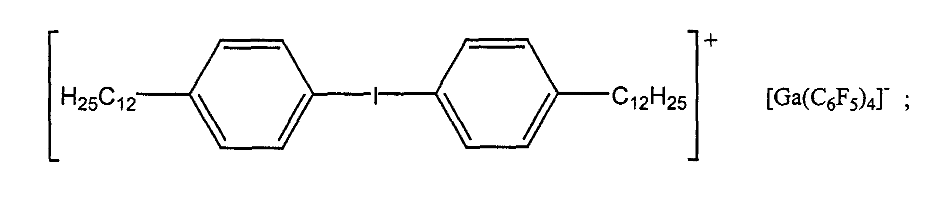 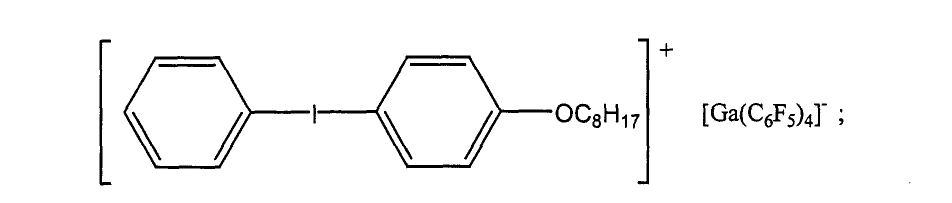 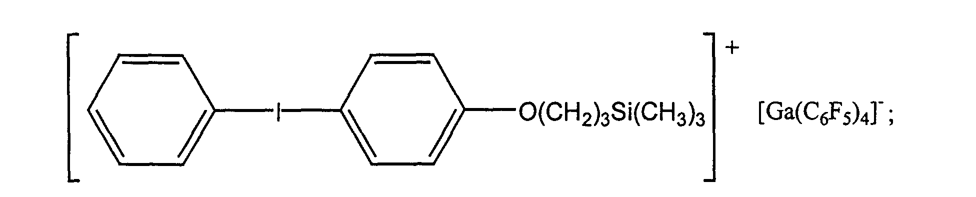 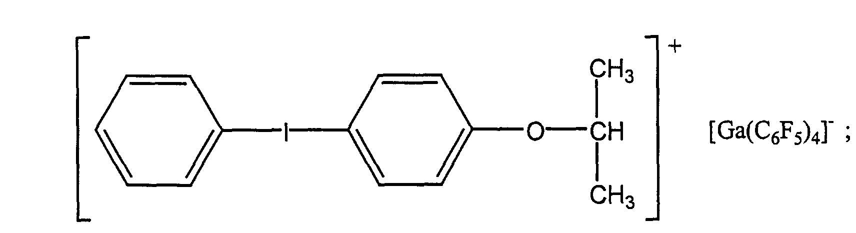 and

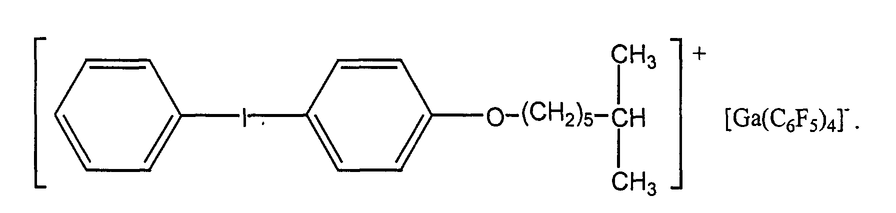

8. A method of preparing a cross-linked polyorganosiloxane coating comprising:
(a) distributing on a substrate so as to form a pre-cured coating a solution comprising an epoxy-functionalized polyorganosiloxane containing 0.01 to 20 weight percent of an onium salt of formula (I)
Q⁺ [MR³ ₐX_{b}] (I)
wherein Q is an onium cation selected from the group consisting of iodonium, sulfonium, phosphonium, ferrocenium and diazonium; M is Al, Ga, In or Tl; R³ are identical or different and represent a monovalent aromatic hydrocarbon radical having from 6 to 14 carbon atoms with at least one electron-withdrawing element or group such as -CF₃, -NO₂ or-CN, or with at least two halogen atoms; X is a halogen atom or hydroxyl group; and a is 1, 2, 3 or 4, and b is 0, 1, 2 or 3, with the proviso that a+b =4; and
(b) irradiating said pre-cured coating with ultraviolet light or an electron beam to form a cured coating.

9. A cross-linked polyorganosiloxane coating prepared according to the method of claim 8.

10. The composition of any one of claims 1 to 7, in crosslinked elastomeric state.

11. An article bearing on at least one surface thereof a coating of the composition of any one of claims 1 to 7.

12. An article bearing on at least one surface thereof the crosslinked composition of claim 10.
